# EUROPEAN PATENT APPLICATION

(11) **EP 4 793 174 A1**
(43) Date of publication of application: **19.08.2026**
(21) Application number: 26155715.1
(22) Date of filing: 02.02.2026
(51) Int. Cl.: B64D 27/357, B64D 41/00, H01M 50/30, H01M 50/358

(54) **VENTING SYSTEM**

(30) Priority: 14.02.2025 IN 202511013008
(71) Applicant: Airbus (S.A.S.), 31700 Blagnac (FR)
(72) Inventor: KOMARLA, Sasank, Bristol, BS34 7PA (GB)
(74) Representative: Hucker, Nerys

(57) **Abstract**

An aircraft has an energy storage system comprising a first battery 6a comprising first and second battery modules 10, 11. A venting system 7 is provided comprising a first battery module exhaust 18, a second battery module exhaust 19 and a first battery manifold 20 arranged to connect the first and second battery module exhausts to a first flow path extending to an exhaust port 8 of the aircraft. The first battery manifold 20 includes a first valve 28 comprising a first flap 29 having a first position in which fluid flow from one of the first and second battery module exhausts is restricted; a second position in which fluid flow from the other of the first and second battery module exhausts is restricted; and a neutral position in which fluid can flow from both first and second battery module exhausts to the first flow path. The first valve 28 is biassed towards the neutral position. The venting system of the present invention is more lightweight than was hitherto achievable, protects other modules and components of the energy storage system from the heat of gas emissions and reduces pressure losses, so that the emitted gas is more likely to exit the aircraft, typically via a burst disc

## Description

### FIELD OF THE INVENTION

This invention relates to an aircraft venting system. The invention also relates to an aircraft energy storage system, such as a battery or an array of batteries, and its associated venting system. The invention further relates to an aircraft including such a venting system, or such an energy storage and venting system.

### BACKGROUND OF THE INVENTION

An aircraft conventionally includes an electrical system arranged to energise various devices on the aircraft, such as flight instruments, navigation aids, cabin heating and lighting. An aircraft's electrical system typically includes one or more batteries arranged to store electrical energy. Previously, lead-acid or Nickel-Cadmium batteries were employed, but there has recently been a move towards Lithium ion batteries, which are rechargeable and dependable. A typical aircraft battery installation comprises groups of cells contained in one or more enclosures or modules.

A problem which may be encountered with aircraft batteries is that, if the battery deteriorates, hot gases can be emitted which must be evacuated to the environment outside of the aircraft. To this end, a venting system is provided between the, or each, battery pack and a vent on the exterior surface of the aircraft.

Typical venting systems include ducts and burst discs and their associated assemblies which can add to the weight of the aircraft . A further problem is that of pressure loss in the venting system. Gas reaching the outlet vent needs to be at sufficient pressure to activate the burst disc at the exit port so that the gas vents to atmosphere, otherwise it may remain in the venting system of the aircraft

### SUMMARY OF THE INVENTION

A first aspect of the invention provides an aircraft venting system for an aircraft having an energy storage system comprising a first battery comprising first and second battery modules. The venting system comprises a first battery module exhaust, a second battery module exhaust and a first battery manifold arranged to connect the first and second battery module exhausts to a first flow path extending to an exhaust port of the aircraft. The first battery manifold includes a first valve comprising a flap having a first position in which fluid flow from one of the first and second battery module exhausts is restricted; a second position in which fluid flow from the other of the first and second battery module exhausts is restricted; and a neutral position in which fluid can flow from both first and second battery module exhausts to the first flow path. The flap is biassed towards the neutral position.

Advantageously, the aircraft venting system is for an aircraft having an energy storage system further comprising a second battery comprising third and fourth battery modules. The venting system then further comprises a third battery module exhaust, a fourth battery module exhaust and a second battery manifold arranged to connect the third and fourth battery module exhausts to a second flow path extending to the exhaust port of the aircraft. The second battery manifold includes a second valve comprising a second flap having a first position in which fluid flow from one of the third and fourth battery module exhausts is restricted; a second position in which fluid flow from the other of the third and fourth battery module exhausts is restricted; and a neutral position in which fluid can flow from both third and fourth battery module exhausts to the second flow path. This second flap is also biassed into the neutral position.

Preferably, the first and second flow paths include a common duct arranged to fluidly connect the first and second battery manifolds to the exhaust port of the aircraft. The aircraft venting system may further comprise a further third valve comprising a third flap having a first position in which fluid flow from one of the first and second batteries to the common duct is restricted; a second position in which fluid flow from the other of the first and second batteries to the common duct is restricted; and a neutral position in which fluid can flow from both batteries to the common duct. The third flap is also biassed towards the neutral position.

Advantageously, at least one of the aforementioned valves, or even each one of the valves, includes at least one stop arranged to prevent motion of the flap beyond a predetermined position.

The exhaust port of the aircraft may include a burst disc, arranged to open and admit fluid to flow through it when the pressure of the fluid impinging on it exceeds a predetermined pressure.

Another aspect of the present invention provides an aircraft energy storage and venting system in which the energy storage system comprises a first battery comprising first and second battery modules. The venting system comprising a first battery module exhaust, a second battery module exhaust and a first battery manifold arranged to connect the first and second battery module exhausts to a first flow path extending to an exhaust port of the aircraft. The first battery manifold includes a first valve comprising a flap having a first position in which fluid flow from the first battery module exhaust is restricted; a second position in which fluid flow from the second battery module exhaust is restricted; and a neutral position in which fluid can flow from both first and second battery module exhausts to the first flow path. The flap is biassed towards the neutral position.

A further aspect of the present invention provides an aircraft energy storage and venting system in which the energy storage system comprises a first battery comprising first and second battery modules; and a second battery comprising third and fourth battery modules. The venting system comprises a first battery module exhaust, a second battery module exhaust and a first battery manifold arranged to connect the first and second battery module exhausts to a first flow path extending to an exhaust port of the aircraft. The venting system then further comprises a third battery module exhaust, a fourth battery module exhaust and a second battery manifold arranged to connect the third and fourth battery module exhausts to a second flow path extending to the exhaust port of the aircraft. The first battery manifold includes a first valve comprising a first flap having a first position in which fluid flow from the first battery module exhaust is restricted; a second position in which fluid flow from the second battery module exhaust is restricted; and a neutral position in which fluid can flow from both first and second battery module exhausts to the first flow path. The first flap is biassed towards the neutral position. The second battery manifold includes a second valve comprising a second flap having a first position in which fluid flow from the third battery module exhaust is restricted; a second position in which fluid flow from the fourth battery module exhaust is restricted; and a neutral position in which fluid can flow from both third and fourth battery module exhausts to the second flow path. This second flap is also biassed into the neutral position.

Preferably, at least one of the batteries includes a battery control unit arranged to control operation of the or each module of a battery pack.

Advantageously, the (or each) battery has a casing that includes thermally insulating material. The thermally insulating material may form the casing itself, or may be included as a liner or cover for the casing. The term "thermally insulating material" can be defined as a material having a thermal conductivity of 0.1 W m-1 K-1 or less.

The, or each, battery module may comprise a plurality of battery cells, at least some of which may be Lithium Ion (Li-ion) battery cells.

The invention further provides an aircraft including the aforementioned aircraft venting system, or the above energy storage and venting system.

It will of course be appreciated that features described in relation to one aspect of the present invention may be incorporated into other aspects of the present invention.

The term "fluid" is intended to encompass both liquids and gases.

### BRIEF DESCRIPTION OF THE DRAWINGS

The invention will now be described, by way of example, with reference to the accompanying drawings, in which:
Figure 1 is a side view of an aircraft including a venting system constructed according to the invention;
Figure 2 is a schematic diagram of the venting system of Figure 1;
Figure 3a is an enlarged view of part of the venting system of Figure 1;
Figure 3b is the part of the venting system of Figure 3a in a first operating condition;
Figure 3c is the part of the venting system of Figure 3a in a second operating condition;
Figure 4 is a schematic diagram of the venting system of Figure 1 in the same operating condition as Figure 3c;
Figure 5 is a schematic diagram of the venting system of Figure 1 in another operating condition; and
Figure 6 is a schematic diagram of the venting system of Figure 1 in a further operating condition.

### DETAILED DESCRIPTION OF EMBODIMENT(S)

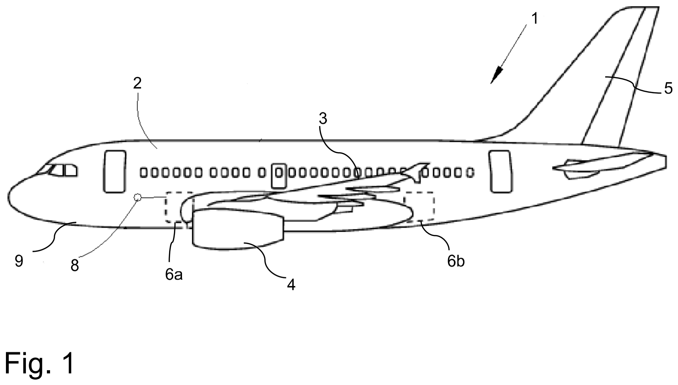

With reference to Figure 1, an aircraft in the form of a typical transonic commercial passenger aeroplane is shown and indicated generally by the reference numeral 1. The aircraft 1 comprises a fuselage 2, wings 3, main engines 4 and a tail 5. The aircraft 1 further contains within it an energy storage system. The energy storage system comprises a plurality of batteries in the form of battery packs, two of which 6a, 6b are shown in broken lines in Figure 1. Each battery pack 6a, 6b comprises a housing containing at least one battery or cell, for example a lithium-ion battery. The battery packs 6a, 6b are located in avionics bay compartments, which are pressurised and partially temperature-controlled zones. The batteries are arranged to provide electrical power to devices on the aircraft through electrical conductors (not shown) running between the battery packs 6a, 6b and the electrical devices, which typically comprise electrical and avionics systems provided on-board the aircraft 1 during pre-flight phases, for starting one or more of the aircraft engines 4 and/or for starting an auxiliary power unit (not shown).

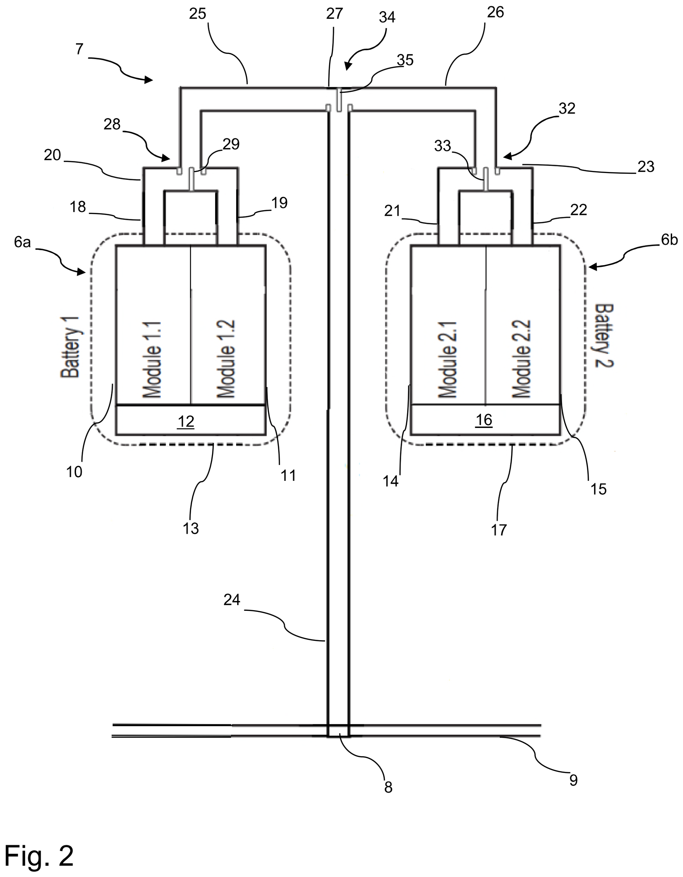

In the event of deterioration of one or more of the batteries, a venting system is provided for the removal of gases, which venting system is indicated generally by the reference numeral 7. The general layout of an example venting system 7 is shown in Figure 2. The venting system 7 is arranged to fluidly connect the energy storage system to the ambient environment via an exit port 8 in the outer skin 9 of the aircraft.

With reference to Figure 2, the energy storage system comprises a plurality of battery packs, including the two packs 6a, 6b shown in Figure 1. Of course, any number of battery packs 6 could be provided.

The first battery pack 6a comprises a plurality of battery modules. There are two in this example: a first battery module 10 (labelled "module 1.1") and a second battery module 11 (labelled "module 1.2"). Each module 10, 11, comprises a plurality of battery cells which store chemical energy and, when required, convert said chemical energy into electrical energy which can be used to power the various electrical and avionics systems provided on-board the aircraft 1. The number of battery cells which make up each module is selected based on the energy demand of the aircraft 1 or based on the energy demand of the application for which the battery unit is intended.. The battery modules 10, 11, are housed in respective containers arranged to thermally and physically isolate each battery module from the other. The battery modules 10, 11 are electrically connected to a first battery control unit (BCU) 12, which serves as the control centre for the battery pack 6a. The battery modules 10, 11, and the BCU 12 are located in a first battery pack housing 13, which typically comprises a thermally insulating material.

The second battery pack 6b is arranged in parallel to the first battery pack 6a and comprises a third battery module 14 (labelled "module 2.1") and a fourth battery module 15 (labelled "module 2.2"). Each module 14, 15 comprises a plurality of battery cells. The battery modules 14, 15 are housed in respective containers arranged to thermally and physically isolate each battery module from the other. The modules 14, 15 are electrically connected to a second BCU 16. The battery modules 14, 15 and the BCU 16 are located in a housing 17, which may also be thermally insulating.

The architecture of the venting system allows for modular level segregation - in other words the modules 10, 11, 14, 15 are mechanically, functionally and thermally isolated from each other. Furthermore, the venting system achieves battery level segregation, with the battery packs 6a, 6b being mechanically, functionally and thermally isolated from each other.

In the illustrated embodiment, the battery modules 10, 11, 14, 15 are lithium-ion battery modules and hence the first, second, third and fourth battery modules are each made up of a plurality of lithium-ion battery cells. However, it shall be appreciated that in other embodiments, the battery ventilation system according to the present invention may be utilised with battery modules made up of different types of cells.

Whilst the illustrated embodiment depicts a system comprising a pair of battery packs 6a, 6b, which are each made up of two battery modules 10, 11, 14, 15, it will be appreciated that in other embodiments, the battery ventilation system may have any number of battery packs.and the respective battery packs may have a different number of battery modules.

In the event of deterioration of one or more of the battery cells contained within a battery module 10, 11, 14, 15, gases may be produced which need to be removed from the aircraft and vented to the atmosphere. To this end, the venting system 7 includes a first battery module exhaust 18, fluidly connected to the first battery module 10 of the first battery pack 6a; and a second battery module exhaust 19, fluidly connected to the second battery module 11 of the first battery pack 6a. The first and second battery module exhausts 18, 19 take the form of ducts that are fluidly connected to a first battery exhaust manifold 20. Similarly, the venting system 7 further comprises a third battery module exhaust 21, fluidly connected to the third battery module 14 of the second battery pack 6b; and a fourth battery module exhaust 22, fluidly connected to the fourth battery module 15 of the second battery pack 6b. The third and and fourth battery module exhausts 21, 22 take the form of ducts that are fluidly connected to a second battery exhaust manifold 23.

Each of the battery exhaust manifolds 20, 23 forms part of a fluid flow path that connects to the exit port 8 arranged in the outer skin 9 of the aircraft. The fluid flow path includes a common duct 24 or main line, with a section of outlet duct or line connecting each of the exhaust manifolds 20, 23 to the common duct 24. A first outlet line 25 connects the first battery exhaust manifold 20 to the common duct 24; and a second outlet line 26 connects the second battery exhaust manifold 23 to the common duct 24. In this embodiment, the first outlet line 25 and second outlet line 26 form a T-junction 27 with the common duct 24.

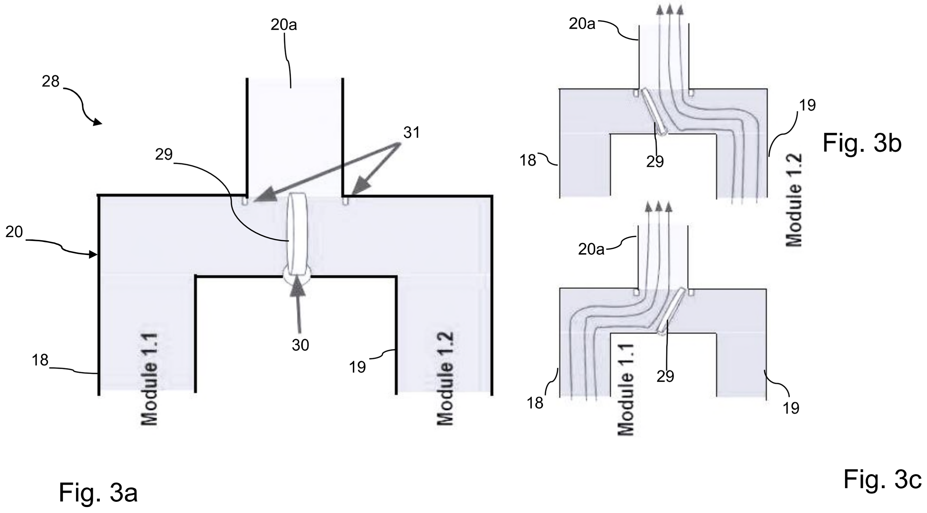

In accordance with the invention, the first battery exhaust manifold includes a first valve 28, which is shown in more detail in the enlarged drawing of Figure 3a. The valve 28 comprises a hinged flap 29, mounted in the manifold 20 at the junction where the flow path of the first battery module exhaust 18 and second battery module exhaust 19 meet. The flap 29 is shown in Figure 3a in a neutral position, which is the position of the valve 28 in normal operating conditions. The flap 29 is resiliently biased into this neutral position by means of a resilient mounting 30 in the form of a spring, an elastomeric valve seat or similar.

In the event of a battery module deteriorating, the hot gas thus produced exits the battery module at pressure via its respective exhaust. It is desirable to prevent such hot gases from flowing to the other battery module, which could cause the temperature of the other battery module to rise. A rise in temperature may cause degradation of the other battery module's performance, or even irreversible damage. In the venting system of the present invention, the expelled gas causes the flap of the valve to be urged away from the neutral position and towards the manifold duct connected to the other battery module, thereby restricting that opening and inhibiting gas from flowing towards the other battery module. The expelled gas then exits the manifold at its outlet and flows into the first outlet line. For example, with reference to Figure 3c, in the event that the first battery module 10 (module 1.1) experiences deterioration, the pressurised gases emitted from this module impinge on the flap 29 of the valve 28 and cause it to pivot towards the part of the manifold 20 connected to the second battery module exhaust 19, thereby restricting this duct and preferably blocking it entirely. The flap 29 preferably has a shape that corresponds with the internal dimensions of the ducts of the manifold 20, and may be circular, elliptical or polygonal. The flap 29 may be arranged to move into this position when the expelled gas reaches a predetermined pressure threshold. The gas emitted from the first battery module 10 is hampered from flowing into the second battery module exhaust 19 and hence to the second battery module 11. The emitted gas then leaves the manifold 20 at its outlet 20a and flows into the outlet line 25.

Similarly, Figure 3b illustrates the condition of the valve 28 if instead the second battery module 19 (module 1.2) expels gas under pressure, with the flap 29 being pushed by the pressurised gas in the other direction to block off the part of the manifold 20 fluidly connected to the first battery module exhaust 18, thereby inhibiting the gas from flowing towards the first battery module 10 . The gas thus flows to the outlet 20a of the manifold 20 and thence to the first outlet line 25.

The valve 28 further comprises stops in the form of arrestor pins 31, arranged to prevent rotational movement of the flap 29 beyond predetermined extreme positions, as shown in Figures 3b and 3c. In the event that gas is no longer emitted by a battery module, the flap 29 returns to the neutral position of Figure 3a by virtue of the restoring force of the resilient mounting 30.

Referring back to Figure 2, the second battery exhaust manifold 23 includes a second valve 32 having a similar construction to the first valve 28. The second valve comprises a second flap 33, resiliently mounted in the second battery exhaust manifold 23 at the junction where flowpaths of the third battery module exhaust 21 and fourth battery module exhaust 22 meet. The flap 33 is resiliently biased towards a neutral position by means of a resilient mounting (not shown in the drawings), in a similar fashion to the first valve 28. In the event of a module 14, 15 of the second battery pack 6b deteriorating, the pressure of the expelled gas causes the flap 33 of the valve to be pushed away from the neutral position and towards the part of the manifold fluidly connected to the exhaust 21, 22 of the other battery module of the second battery pack 6b, thereby restricting the duct associated with that exhaust and inhibiting gas from flowing towards the other battery module. Arrestor pins prevent the flap 33 from turning beyond predetermined limits. The expelled gas then exits the manifold 23 at its outlet and flows into the second outlet line 26, in the same manner as described above with reference to the first battery pack 6a.

As mentioned above, the first and second outlet lines 25, 26 meet the common duct 24 at a T-junction 27, which also acts as a manifold. The venting system 7 further includes a third valve 34, mounted in the T-junction at the point where the first and second output lines meet the common duct. The third valve 34 has a similar construction as the first and second valves, with a third flap 35 being resiliently mounted in the T-junction 27 so as to occupy a central, neutral position under normal operating conditions. In the event of gases being expelled from one of the battery packs 6a, 6b, the pressure of the gas flow through the respective outlet line 25, 26, pushes the third flap 35 towards the outlet line of the other battery pack, thereby restricting that outlet line and inhibiting hot gases from flowing towards the other battery pack.

The expelled gas then flows from the T-junction 27 into the common duct 24 and towards the exit port 8. The exit port 8 in this embodiment comprises a burst disc at, or close to, the outer skin 9 of the aircraft 1. A burst disc is a device that is calibrated to rupture when the pressure exerted on it exceeds a predetermined threshold. Thus, the burst disc 8 provides an outlet for gases when the pressure of those gases inside the venting system 7 exceeds the predetermined threshold of the burst disc. The venting system 7 of the present invention ensures that any gases emitted by one or more of the battery modules has sufficient pressure at the exit port 8 to activate the burst disc. The gas is vented to the atmosphere through the system of ducts, pipes and manifolds, and the burst disc.

Previously, it was proposed to use a venting system having burst discs at the outlet of each battery module. However, each burst disc and its associated fittings adds considerably to the weight of the venting system. A further problem which may be encountered is that the hot gases released from one battery module through a burst disc may flow towards the other battery module. As mentioned above, such hot gases could cause unwanted temperature rises of other components or modules of the battery packs. A further difficulty of using a system of burst discs is that of pressure losses in the system: the gases flowing to other parts of the battery venting system may create so-called "dead zones", causing a loss of pressure in the system and reducing the likelihood of the gases being at sufficient pressure to rupture the burst disc at the exit port. The venting system of the present invention is more lightweight than was hitherto achievable, protects other modules and components of the energy storage system from the heat of gas emissions and reduces pressure losses, so that the emitted gas is more likely to exit the aircraft via the burst disc.

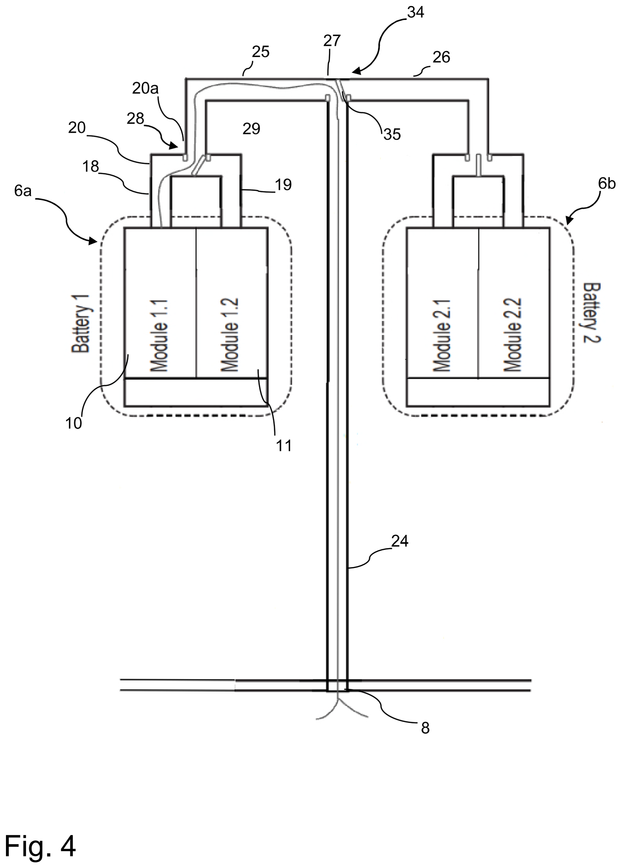

Various example scenarios showing different operating conditions of the venting system 7 of the present invention will now be described with reference to Figures 4 to 6. Each of these drawings includes a solid line or lines indicating the flow of fluids through the venting system 7. Figure 4 illustrates a scenario in which the first module 10 of the first battery pack 6a (module 1.1) is emitting gases, which flow out of the first battery module exhaust 18. The pressure of the gases exiting the battery module bears against the flap 29 of the first valve 28, thereby pushing it towards the second battery module exhaust 19. The flap closes off the exhaust opening in the first manifold 20 and reduces the likelihood of gas flowing towards the second battery module 11 of the first battery pack (module 1.2), so that the second battery module is protected from heating by the emitted gases. These gases then flow through the manifold 20, and leave via the manifold exhaust 20a into the first outlet line 25. They then encounter the third valve 34 at the T-junction 27, and bear against the flap 35 of the valve. This causes the flap 35 of the third valve 34 to pivot towards the outlet line 26 of the second battery pack 6b, thereby restricting its opening into the T-junction 27 and hampering gases from flowing towards the second battery pack 6b, so that the entire second battery pack is protected from heating by the emitted gases. The gas flow then enters the common duct 24 with sufficient pressure to activate the burst disc at the exit port 8 and safely vent to atmosphere.

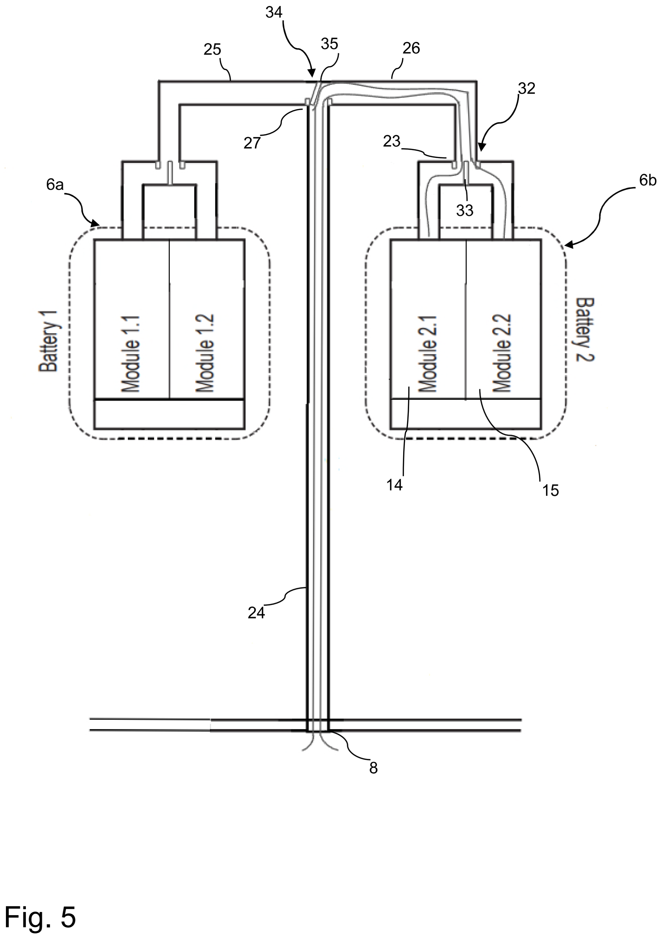

In the scenario shown in Figure 5, both battery modules 14, 15 of the second battery pack 6b (modules 2.1 and 2.2) have suffered deterioration and are emitting gas. In this example, the flap 33 of the second valve 32 is being pushed from both sides by the pressurised gas flow from the modules 14, 15, and so will occupy a neutral, or near-neutral position, in dependence on the pressure difference between the two gas flows. In this position, the valve 32 permits gas from both battery modules 14, 15 (modules 2.1 and 2.2) to flow out of the battery pack 6b, through the manifold 23 and into the second outlet line 26. When the combined gas flow reaches the T-junction 27 with the common duct 24, it bears against the flap 35 of the third valve 34, urging it towards the first outlet line 25. The flap 35 restricts the opening to the first outlet line 25 to the extent that gas emerging from the second battery pack 6b is inhibited from flowing towards the first battery pack 6a, thereby protecting it. The outflowing gas then flows through the common duct 24 to the burst disc 8 and ruptures it, so that gases emitted by the second battery pack 6b are vented to atmosphere.

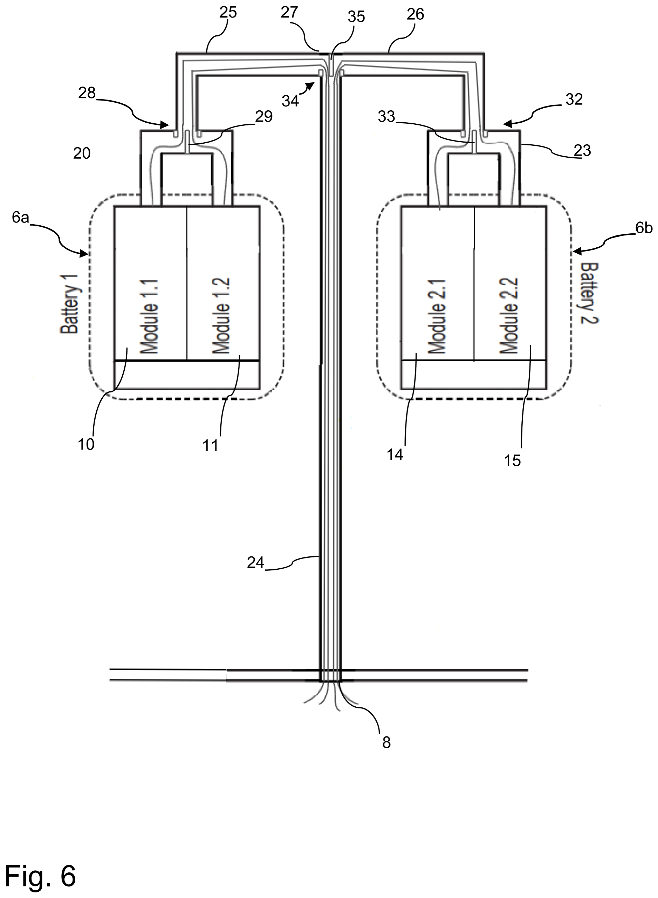

In the unlikely scenario of Figure 6, all battery modules 10, 11, 14, 15 have failed and have released gases. In this example, the flap 29 of the first valve 28 is being pushed from both sides by the pressurised gas flow from the first and second battery modules 18, 19 of the first battery pack 6a (modules 1.1 and 1.2), and so will occupy a neutral, or near-neutral position, in dependence on the pressure difference between the two gas flows. In this position, the valve 28 permits gas from both battery modules 10 and 11 (modules 1.1 and 1.2) to flow out of the battery pack 6a, through the manifold 20 and into the first outlet line 25. Likewise, the flap 33 of the second valve 32 is pushed from both sides by the gases being emitted by the third and fourth battery modules 14, 15 (modules 2.1 and 2.2) and so occupies a position that permits gas to flow from both modules, through the second manifold 23 and into the second outlet line 26. Where the outlet lines 25, 26 meet at the T-junction 27, the respective gas flows bear against both sides of the flap 35 of the third valve 34. Hence this valve also occupies a neutral, or near-neutral position, permitting gas to flow from both sides into the common duct 24. The venting system 7 of the present invention ensures that the emitted gas flow has sufficient pressure to activate the burst disc 8 so that all of the emitted gases can be safely vented from the aircraft.

Variations may be made without departing from the scope of the invention. For example, instead of manufacturing the casing for the battery modules and battery packs from thermally insulating material, these containers could instead be made thermally insulating by the application of a layer of suitable material, either as a lining inside the container or around its exterior surfaces.

The, or each, battery may be of the lithium iron phosphate (LiFePO4) type, which presents a less reactive chemistry and improved thermal containment than conventional lithium ion batteries while also being free of toxic cadmium and cobalt. Other battery chemistries may be utilised.

Each manifold is shown as having two inlets and one outlet, but of course they could have any number of inlets in dependence on the number of battery modules present in the battery pack. The manifolds may take the form of T-junctions or inverted T-junctions, in dependence on the physical restraints imposed on the overall venting system.

The flap of any or all of the valves may have a living hinge or may itself be formed of elastomeric material, arranged to deform at a predetermined pressure threshold to cover one or the other of the battery module exhausts in the manifold. The venting system may be arranged such that any or all of the valves occupy the neutral position under the assistance of gravity.

The above embodiments are to be understood as illustrative examples of the invention. Equivalents and modifications not described above may also be employed without departing from the scope of the invention, which is defined in the accompanying claims.

It is to be understood that any feature described in relation to any one embodiment may be used alone, or in combination with other features described, and may also be used in combination with one or more features of any other of the embodiments, or any combination of any other of the embodiments.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

It should be noted that throughout this specification, "or" should be interpreted as "and/or".

Although the invention has been described above mainly in the context of a fixed-wing aircraft application, it may also be advantageously applied to other types of aircraft, including but not limited to helicopters, drones and spacecraft.

## Claims

1. An aircraft venting system for an aircraft having an energy storage system comprising a first battery comprising first and second battery modules, the venting system comprising:
a first battery module exhaust; a second battery module exhaust; a first battery manifold arranged to connect the first and second battery module exhausts to a first flow path extending to an exhaust port of the aircraft;
the first battery manifold including a first valve comprising a flap having a first position in which fluid flow from one of the first and second battery module exhausts is restricted; a second position in which fluid flow from the other of the first and second battery module exhausts is restricted; and a neutral position in which fluid can flow from both first and second battery module exhausts to the first flow path, the flap being biassed towards the neutral position.

2. An aircraft venting system for an aircraft having an energy storage system comprising a first battery comprising first and second battery modules, and a second battery comprising third and fourth battery modules; the venting system comprising:
a first battery module exhaust; a second battery module exhaust; a first battery manifold arranged to connect the first and second battery module exhausts to a first flow path extending to an exhaust port of the aircraft;
the first battery manifold including a first valve comprising a first flap having a first position in which fluid flow from one of the first and second battery module exhausts is restricted; a second position in which fluid flow from the other of the first and second battery module exhausts is restricted; and a neutral position in which fluid can flow from both first and second battery module exhausts to the first flow path, the first flap being biassed towards the neutral position;
a third battery module exhaust; a fourth battery module exhaust; a second battery manifold arranged to connect the third and fourth battery module exhausts to a second flow path extending to the exhaust port of the aircraft;
the second battery manifold including a second valve; the second valve comprising a second flap having a first position in which fluid flow from one of the third and fourth battery module exhausts is restricted; a second position in which fluid flow from the other of the third and fourth battery module exhausts is restricted; and a neutral position in which fluid can flow from both third and fourth battery module exhausts to the second flow path, the second flap being biassed towards the neutral position.

3. An aircraft venting system as claimed in claim 2, in which the first and second flow paths include a common duct arranged to fluidly connect the first and second battery manifolds to the exhaust port of the aircraft.

4. An aircraft venting system as claimed in claim 3, further comprising a third valve comprising a third flap having a first position in which fluid flow from one of the first and second batteries to the common duct is restricted; a second position in which flow from the other of the first and second batteries to the common duct is restricted; and a neutral position in which fluid can flow from both batteries to the common duct, the third flap being biassed towards the neutral position.

5. An aircraft venting system as claimed in any preceding claim, in which the valve, or at least one of the valves, includes at least one stop arranged to prevent motion of the flap beyond a predetermined position.

6. An aircraft venting system as claimed in any preceding claim, in which the exhaust port of the aircraft includes a burst disc.

7. An aircraft energy storage and venting system comprising:a first battery comprising first and second battery modules; and an aircraft venting system as claimed in claim 1.

8. An aircraft energy storage and venting system comprising: a first battery comprising first and second battery modules; a second battery comprising third and fourth battery modules; and an aircraft venting system as claimed in claim 2.

9. An aircraft energy storage and venting system battery as claimed in claim 7 or claim 8, in which the or each battery includes a battery control unit.

10. An aircraft energy storage and venting system battery as claimed in any one of claims 7 to 9, in which the or each battery has a casing including thermally insulating material.

11. An aircraft energy storage and venting system battery as claimed in any one of claims 7 to 10, in which the or each battery module comprises a plurality of battery cells.

12. An aircraft energy storage and venting system battery as claimed in claim 11, in which at least some of the battery cells are Lithium Ion (Li-ion) battery cells.

13. An aircraft including an aircraft venting system as claimed in any one of claims 1 to 6.

14. An aircraft including an aircraft energy storage and venting system as claimed in any one of claims 7 to 12.
